**Europäisches Patentamt**

**European Patent Office**

**Office européen des brevets**

(19)

(11) Veröffentlichungsnummer : **0 141 085**
**B1**

(12)

# EUROPÄISCHE PATENTSCHRIFT

(45) Veröffentlichungstag der Patentschrift :
25.05.88

(51) Int. Cl.⁴ : **G 21 C   3/32**

(21) Anmeldenummer : **84109578.9**

(22) Anmeldetag : **10.08.84**

(54) **Kernreaktorbrennelement.**

(30) Priorität : **26.08.83 DE 3330850**

(43) Veröffentlichungstag der Anmeldung :
**15.05.85 Patentblatt 85/20**

(45) Bekanntmachung des Hinweises auf die Patenterteilung : **25.05.88 Patentblatt 88/21**

(84) Benannte Vertragsstaaten :
**DE FR SE**

(56) Entgegenhaltungen :
**FR-A- 2 337 407**
**FR-A- 2 365 861**
**FR-A- 2 416 529**
**FR-E-    91 358**
**US-A- 3 736 227**

(73) Patentinhaber : **Siemens Aktiengesellschaft Berlin
und München
Wittelsbacherplatz 2
D-8000 München 2 (DE)**

(72) Erfinder : **Frömel, Gustav
Forellenweg 19
D-8520 Erlangen (DE)**
Erfinder : **Steinke, Alexander
Stettiner Strasse 13
D-8553 Ebermannstadt (DE)**

EP 0 141 085 B1

## Beschreibung

Die Erfindung betrifft ein Kernreaktorbrennelement mit einem gitterförmigen Abstandshalter mit quadratischen Gittermaschen, in dem zueinander parallele Stäbe, insbesondere Kernbrennstoff enthaltende Brennstäbe, jeweils in einer Gittermasche befindlich angeordnet sind und der flache Außenstege quer zu den Stäben aufweist mit einem zu den Stäben parallelen Zwischenstreifen jeweils zwischen zwei Außenstegen, der zu diesen beiden Außenstegen geneigt ist.

Ein derartiges Kernreaktorbrennelement ist bereits in Gebrauch. Es weist ein aus einem Kopfteil bestehendes Endteil und ein aus einem Fußteil bestehendes Endteil auf. Diese beiden Endteile sind durch Steuerstabführungsrohre miteinander verbunden. Jedes der Steuerstabführungsrohre ist mit einem Ende an einer Kopfplatte des Kopfteiles und mit dem anderen Ende an einer Fußplatte des Fußteiles lösbar z. B. mit einer Schraubverbindung befestigt. Die Steuerstabführungsrohre durchsetzen Kopf- und Fußplatte rechtwinklig. Kopf- und Fußplatte sind rechteckig, in der Regel quadratisch.

Die Steuerstabführungsrohe sind jeweils in einer quadratischen Gittermasche durch mehrere rechteckige, in der Regel ebenfalls quadratische, gitterförmige Abstandshalter geführt, die in Richtung der Längsachse der Steuerstabführungsrohe und damit auch des Brennelementes gesehen in der Regel gleichen Abstand voneinander haben und die untereinander und mit der Kopf- und Fußplatte fluchten. Brennstäbe, die Kernbrennstoff in gasdicht verschlossenen Hüllrohren enthalten, sind durch die nicht von den Steuerstabführungsrohren besetzten quadratischen Gittermaschen des Abstandshalters geführt. Diese Brennstäbe sind weder an der Kopfplatte des Kopfteiles noch an der Fußplatte des Fußteiles befestigt, sondern sie haben zwischen Kopf- und Fußplatte in Längsrichtung Spiel und können sich daher in Richtung ihrer Längsachse d. h. in Längsrichtung des Brennelementes frei ausdehnen.

Im Reaktorkern insbesondere eines Druckwasser-Kernreaktors sind eine Reihe solcher gleich ausgeführter Kernreaktorbrennelementes mit parallelen Längsachsen im Schachbrettmuster dicht nebeneinander angeordnet, Beim Be- und Entladen des Kernreaktors mit den einzelnen Kernreaktorbrennelementen kann es daher zum Verhaken von benachbarten Kernreaktorbrennelementen im Reaktorkern an den Außenstegen der Abstandshalter kommen, was zu einer Zerstörung dieser Außenstege führt und ein Wiedereinsetzen der Kernreaktorbrennelemente in den Reaktorkern unmöglich macht. Besonders neigen Kernreaktorbrennelemente zum Verhaken, die sich durch Betriebsbeanspruchungen im Reaktorkern stark gekrümmt haben.

Es wurden deshalb bereits die beiden zu den Stäben d. h. zu den Steuerstabführungsrohren und den Brennstäben des Kernreaktorbrennelementes rechtwinkligen Kanten der Außenste der Abstandshalter mit leicht nach innen geneigten Abweiserfahnen versehen, an denen beim Be- und Entladen des Kernreaktors die zu den Stäben des Kernreaktorbrennelementes rechtwinkligen Kanten der Außenstege der Abstandshalter von seitlich benachbarten, in Längsrichtung relativ zueinander bewegten Kernreaktorbrennelementen abgleiten können, so daß ein Verhaken an diesen Kanten vermieden wird.

Derartige nach innen geneigte Abweiserfahnen können jedoch an den Ecken eines Abstandshalters des Kernreaktorbrennelementes, in denen sich die Eckstäbe des Kernreaktorbrennelementes, zumeist Brennstäbe, jeweils in einer quadratischen Eck-Gittermasche zwischen zwei zueinander rechtwinkligen Außenstegen befinden, nicht angebracht werden, da sie dort die thermohydraulischen Verhältnisse für das Kühlmittel im Kernreaktor derart verschlechtern, daß die Eckstäbe nicht ausreichend gekühlt werden und deshalb Schaden nehmen können. Es besteht deshalb die Gefahr, daß sich im Reaktorkern im Schachbrettmuster diagonal benachbarte Kernreaktorbrennelemente beim Be- und Entladen des Kernreaktors mit den Ecken ihrer Abstandshalter verhaken. Selbst ein Abschrägen dieser Ecken bietet in extremen Fällen nicht den erwünschten sicheren Schutz gegen das Verhaken.

Der Erfindung liegt die Aufgabe zugrunde, ein Kernreaktorbrennelement zu schaffen, das sich beim Be- und Entladen eines Kernreaktors nicht mit einem diagonal benachbarten Kernreaktorbrennelement in Kernreaktor an den Ecken der Abstandshalter verhaken kann.

Zur Lösung dieser Aufgabe ist ein Kernreaktorbrennelement der eingangs erwähnten Art erfindungsgemäß dadurch gekennzeichnet, daß außen an dem Zwischenstreifen des Abstandshalters eine Abweisererhebung angebracht ist, die in Richtung der Diagonalen der Eck-Gittermasche zwischen den beiden Außenstegen auf dem Zwischenstreifen steht und die quer zu den beiden Außenstegen und hin zu den beiden Enden des Zwischenstreifens in Längsrichtung der Stäbe abgeschrägt ist.

Die Abweisererhebungen im Schachbrettmuster diagonal benachbarter Kernreaktorbrennelemente können jeweils am Eckstab des anderen Kernreaktorbrennelementes anliegen und die beiden diagonal benachbarten Kernreaktorbrennelemente diagonal auseinander drücken. Während der Relativbewegung der beiden diagonal benachbarten Kernreaktorbrennelemente in Längsrichtung beim Be- oder Entladen des Kernreaktors sind deshalb die Enden der Zwischenstreifen an den Abstandshaltern der diagonal benachbarten Kernreaktorbrennelemente so weit voneinander weggedrückt, daß sie sich nicht mehr verhaken können, wenn sie schließlich über eine der Abschrägungen an der Abweisererhebung am Abstandshalter des diagonal benachbarten Kernreaktorbrennelementes gleiten.

Günstigerweise befindet sich die Abweisererhebung auf einem Federstreifen, der an den Enden des Zwischenstreifens angehängt ist. Auf diese Weise können Kernreaktorbrennelemente, die bereits ohne Abweisererhebung am Zwischenstreifen der Abstandshalter gefertigt vorliegen, ohne großen Aufwand nachgerüstet werden.

Ferner ist es günstig, wenn sich die Abweisererhebung auf einer Lasche an dem einen Außensteg befindet, die den Zwischenstreifen bildet und die an ihrer Innenseite an einer Lasche am anderen Außensteg befestigt ist. Dies vereinfacht die Fertigung des Abstandshalters.

Die Erfindung und ihre Vorteile seien anhand der Zeichnung an drei Ausführungsbeispielen näher erläutert :

Fig. 1 zeigt in perspektivischer Darstellung einen Ausschnitt aus den quadratischen Abstandshalter mit quadratischen Gittermaschen eines erfindungsgemäßen Kernreaktorbrennelementes.

Fig. 2 zeigt schematisch einen Schnitt in Richtung der Diagonalen der Eck-Gittermaschen von Abstandshaltern und damit auch der Abstandshalter zweier Kernreaktorbrennelemente entsprechend Fig. 1, die in einem Reaktorkern im Schachbrettmuster diagonal nebeneinander angeordnet sind.

Fig. 3 und 4 zeigen in perspektivischer Ansicht Ausschnitte von zwei abgewandelten Abstandshaltern von Kernreaktorbrennelementen gemäß der Erfindung.

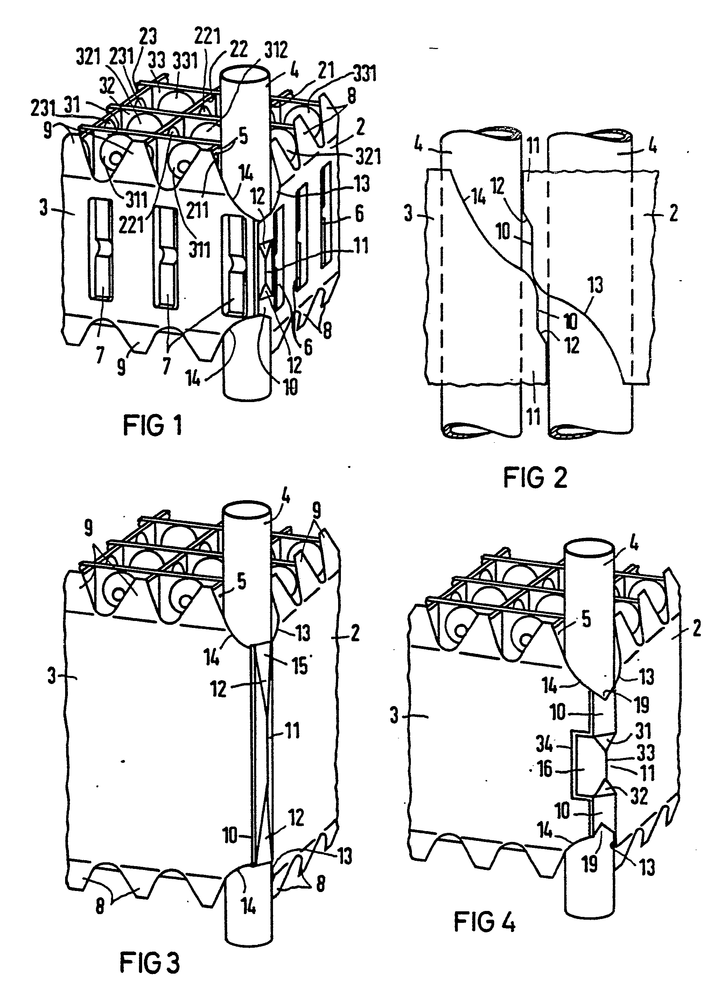

Vom quadratischen gitterförmigen, aus einer Nickel-Eisen-Legierung bestehenden Abstandshalter eines Kernreaktorbrennelementes gemäß der Erfindung sind in Fig. 1 zwei flache ebene Außenstege 2 und 3 zu erkennen, die rechtwinklig zueinander stehen. Auf der Innenseite dieser Außenstege 2 und 3 sind zum Außensteg 2 parallele Innenstege 21 bis 23 und zum Außensteg 3 parallele Innenstege 31 bis 33 angeordnet, die sich rechtwinklig durchsetzen unter Ausbildung von quadratischen Gittermaschen, in denen jeweils ein Steuerstabführungsrohr oder ein Kernbrennstoff enthaltender Brennstab des Kernreaktorbrennelementes angeordnet ist, zu denen die Innen- und Außenstege rechtwinklig sind. Der besseren Übersichtlichkeit halber ist nur ein einziger Brennstab 4 in der äußersten, durch die Außenstege 2 und 3 gebildeten quadratischen Eck-Gittermasche 5 des Abstandshalters dargestellt, zu dessen Längsrichtung die Seitenflächen der Innen- und Außenstege parallel sind, d. h. die Innen- und Außenstege sind hochkant angeordnet. Innerhalb der quadratischen Gittermaschen weisen die Innenstege 21 bis 23 und 31 bis 33 feste Noppen 311, 321 und 331 sowie 211, 221 und 231 und Federn auf, die den nach innen gerichteten Federn 6 des Außensteges 2 und den nach innen gerichteten Federn 7 des Außensteges 3 entsprechen. Noppen und Federn geben dem gitterförmigen Abstandshalter kraftschlüssigen Halt an den durch einzelne Gittermaschen geführten Steuerstabführungsrohren und in anderen Gittermaschen geführten Brennstäben kraftschlüssigen Halt am Abstandshalter. An den zu den zueinander parallelen Steuerstabführungsrohren und Brennstäben im Abstandshalter rechtwinkligen Kanten weisen die Außenstege 2 und 3 leicht nach innen geneigte Abweiserfahnen 8 und 9 auf.

Die Außenstege 2 und 3 sind über einen Zwischenstreifen 10 miteinander verbunden, der sich zwischen diesen beiden Außenstegen 2 und 3 an der zu den zueinander parallelen Steuerstabführungsrohren und Brennstäben in den Gittermaschen parallelen Außenkante des Abstandshalters befindet und der zu diesen Steuerstabführungsrohren und Brennstäben parallel ist. Dieser Zwischenstreifen 10 ist durch eine Lasche am Außensteg 2 gebildet, die eine entsprechende Lasche am Außensteg 3 überlappt und die an ihrer Innenseite mit dieser Lasche am Außensteg 3 verschweißt ist. Der Zwischenstreifen 10 ist flach und eben und zu den beiden Außenstegen 2 und 3 jeweils unter einem Winkel von 45° geneigt, d. h. dieser Zwischenstreifen 10 steht rechtwinklig auf der Diagonalen der Eck-Gittermasche 5 und damit auf der Abstandshalterdiagonalen zwischen den beiden Außenstegen 2 und 3. Außen steht auf diesem Zwischenstreifen 10 in der Mitte zwischen seinen Enden an den zu den Steuerstabführungsrohren und den Brennstäben im Abstandshalter rechtwinkligen Kanten der Außenstege 2 und 3 eine durch Ausprägen aus der Lasche am Außensteg 2 gebildete Abweisererhebung 11 in Richtung der Diagonalen der Eck-Gittermasche 5 bzw. der Abstandshalterdiagonalen zwischen den beiden Außenstegen 2 und 3. Diese Abweisererhebung 11 ist quer zu den beiden Außenstegen 2 und 3 und hin zu den beiden Enden des Zwischenstreifens 10 d. h. in Längsrichtung der im Abstandshalter befindlichen Steuerstabführungsrohre und Brennstäbe unter Ausbildung von Abschrägungsflächen 12 abgeschrägt. Ferner sind die beiden Außenstege 2 und 3 an den Ecken ausgehend von ihrem zu den im Abstandshalter befindlichen Steuerstabführungsrohren und Brennstäben rechtwinkligen Kanten zum zwischen diesen Außenstegen 2 und 3 befindlichen Zwischenstreifen 10 hin unter Ausbildung gleich geneigter Abschrägungen 13 und 14 abgeschrägt.

Wie Fig. 2 zeigt, liegen bei einer Relativbewegung in Längsrichtung von zwei parallelen, im Schachbrettmuster diagonal nebeneinander angeordneten Kernreaktorbrennelementen mit Abstandshaltern entsprechend Fig. 1 die Abweisererhebungen 11 wechselseitig an den jeweiligen Brennstäben 4 in der Eck-Gittermasche 5 an und drücken damit die beiden Zwischenstreifen 10 soweit auseinander, daß sich die Zwischenstreifen 10 der beiden diagonal benachbarten Abstandshalter bei einer Relativbewegung in Längsrichtung der Brennstäbe 4 und damit der Kernreaktorbrennelemente nicht an ihren Enden verhaken können.

In Fig. 3 sind gleiche Teile des gitterförmigen quadratischen Abstandshalters mit gleichen Bezugszeichen wie in Fig. 1 versehen, jedoch sind die Noppen und Federn in den einzelnen Gittermaschen nicht dargestellt. Vom Abstandshalter nach Fig. 1 unterscheidet sich der Abstandshalter nach Fig. 3 dadurch, daß der Zwischenstreifen 10 zwischen den beiden Außenstegen 2 und 3, an dem diese beiden Außenstege miteinander verschweißt sind, flach und eben ausgeführt ist und daß an den Enden dieses Zwischenstreifens 10, die sich an den zu den Steuerstabführungsrohren und Brennstäben im Abstandshalter rechtwinkligen Kanten der Außenstege 2 und 3 befinden, ein Federstreifen 15 eingehängt ist. Dieser Federstreifen 15 besteht aus Federstahl und überdeckt den Zwischenstreifen 10. Ferner weist dieser Federstreifen 15 in der Mitte zwischen seinen Enden eine Abweisererhebung 11 auf, die wie die Abweisererhebung 11 des Abstandshalters nach Fig. 1 in der Diagonalen der Eck-Gittermasche 5 bzw. in der Abstandshalterdiagonalen zwischen den beiden Außenstegen 2 und 3 nach außen steht und die quer zu den beiden Außenstegen 2 und 3 unter Ausbildung von Abschrägungsflächen 12 in Längsrichtung des Brennstabes 4 abgeschrägt ist. Dieser Federstreifen 15 kann nachträglich am fertiggestellten gitterförmigen Abstandshalter angebracht werden, ist also gut zum Nachrüsten von bereits fertiggestellten und vorhandenen Kernreaktorbrennelementen geeignet.

Auch beim quadratischen Abstandshalter nach Fig. 4 sind gleiche Teile mit den gleichen Bezugszeichen wie beim Abstandshalter nach Fig. 1 versehen. Vom Abstandshalter nach Fig. 1 unterscheidet sich der Abstandshalter nach Fig. 4 dadurch, daß die Abweisererhebung 11 durch eine Zunge 16 gebildet ist, die in der Mitte der den Zwischenstreifen 10 bildenden Lasche am Außensteg 2 ausgeschnitten ist. Diese Zunge 16 weist an beiden Seitenkanten je einen spitzen Ausschnitt 31 und 32 auf. Die Spitzer dieser beiden Ausschnitte 31 und 32 liegen auf einer Biegekante 33, die zu den Stäben im Abstandshalter, also insbesondere auch zum Steuerstabführungsrohr 4 in der Eck-Gittermasche 5, parallel ist. An dieser Biegekante 33 ist die Zunge 16 in einem rechten Winkel gebogen. Das abgebogene Ende der Zunge 16 ist auf der Außenseite des anderen Außensteges 3 in einer dort befindlichen vorgeprägten Mulde 34 am Außensteg 3 festgelötet oder festgeschweißt. Der eine an dem einen Außensteg 2 angeformte, durch die Biegekante 33 begrenzte Teil der Zunge 16 liegt in der Ebene dieses Außensteges 2, während sich der andere Teil der Zunge 16 ab der Biegekante 33 praktisch in der Ebene des anderen Außensteges 3 befindet. Beim Abstandshalter nach Fig. 4 ist also ein Prägen der Abweisererhebung 11 vermieden, was besonders vorteilhaft ist, wenn dieser Abstandshalter aus einer Zirkoniumlegierung besteht. Die Abschrägungen der Abweisererhebung 11 werden durch die Kanten der Zunge 16 in den Ausschnitten 31 und 32 gebildet.

In günstiger Weise setzt sich beim Abstandshalter nach Fig. 4 eine geradlinige Abschrägung 13 und 14 an den Ecken der beiden Außenstege 2 und 3 in den Zwischenstreifen 10 unter Ausbildung eines spitzen Ausschnittes 19 an den beiden Enden dieses Zwischenstreifens 10 fort, so daß dort das Abgleiten eines Abstandshalters an einem im Schachbrettmuster diagonal benachbarten Kernreaktorbrennelement weiter verbessert wird.

## Patentansprüche

1. Kernreaktorbrennelement mit einem gitterförmigen Abstandshalter mit quadratischen Gittermaschen, in dem zueinander parallele Stäbe, insbesondere Kernbrennstoff enthaltende Brennstäbe, jeweils in einer Gittermasche befindlich angeordnet sind und der flache Außenstege quer zu den Stäben aufweist mit einem zu den Stäben parallelen Zwischenstreifen jeweils zwischen zwei Außenstegen, der zu diesen beiden Außenstegen geneigt ist, dadurch gekennzeichnet, daß außen an dem Zwischenstreifen (10) des Abstandshalters eine Abweisererhebung (11) angebracht ist, die in Richtung der Diagonalen der Eck-Gittermasche (5) zwischen den beiden Außenstegen (2) und (3) auf dem Zwischenstreifen (10) steht und die quer zu den beiden Außenstegen (2) und (3) und hin zu den beiden Enden des Zwischenstreifens (10) in Längsrichtung der Stäbe (4) abgeschrägt ist.

2. Kernreaktorbrennelement nach Anspruch 1, dadurch gekennzeichnet, daß sich die Abweisererhebung (11) auf einem Federstreifen (15) befindet, der an den Enden des Zwischenstreifens (10) angehängt ist.

3. Kernreaktorbrennelement nach Anspruch 1, dadurch gekennzeichnet, daß sich die Abweisererhebung (11) auf einer Lasche an dem einen Außensteg (2) befindet, die den Zwischenstreifen (10) bildet und die an ihrer Innenseite mit dem anderen Außensteg (3) befestigt ist.

4. Kernreaktorbrennelement nach Anspruch 1, dadurch gekennzeichnet, daß sich die beiden Außenstege (2) und (3) an den Ecken ausgehend von ihren Kanten zum zwischen diesen Außenstegen (2) und (3) befindlichen Zwischenstreifen (10) hin unter Bildung gleich geneigter Abschrägungen (13) und (14) abgeschrägt sind.

5. Kernreaktorbrennelement nach Anspruch 4, dadurch gekennzeichnet, daß eine geradlinige Abschrägung in den Zwischenstreifen (10) unter Ausbildung eines spitzen Ausschnittes (19) an den Enden des Zwischenstreifens (10) fortgesetzt ist.

6. Kernreaktorbrennelement nach Anspruch 3, dadurch gekennzeichnet, daß die Abweisererhebung (11) durch eine aus der Lasche an dem einen Außensteg (2) ausgeschnittenen Zunge (16) in der Ebene dieses einen Außensteges (2) gebildet ist, die an beiden Seitenkanten je einen spitzen Ausschnitt (31) und (32) aufweist, daß sich die Spitzen dieser beiden Ausschnitte auf einer zu den Stäben (4) parallelen Biegekante (33) befinden, an der die Zunge (16) in einem rechten Winkel in die Ebene des anderen Außensteges (3) geboden ist, und daß diese Zunge (16) an der Außenseite dieses anderen Außensteges (3) befestigt ist.

## Claims

1. A nuclear reactor fuel element having a lattice-shaped spacer with square lattice meshes in which rods, in particular fuel rods containing nuclear fuel, are arranged parallel to one another, one in each lattice mesh, and which is provided with flat outer strips extending transversely to the rods, and with an intermediate strip which is parallel to the rods and is in each case arranged between two outer strips and is inclined to these two outer strips, characterised in that the intermediate strip (10) of the spacer is provided externally with a deflecting elevation (11) which is arranged on the intermediate strip (10) in the direction of the diagonal of the corner lattice mesh (5) between the two outer strips (3) and (6) and which is bevelled transversely to the two outer strips (2) and (3) towards the two ends of the intermediate strips (10) in the longitudinal direction of the rods (4).

2. A nuclear reactor fuel element as claimed in Claim 1, characterised in that the deflecting elevation (11) is arranged on a resilient strip (15) which is fixed to the ends of the intermediate strip (10).

3. A nuclear reactor fuel element as claimed in Claim 1, characterised in that the deflecting elevation (11) is arranged on a lug on one outer strip (2), which lug forms the intermediate strip (10) and is secured at its inner side to the other outer strip (3).

4. A nuclear reactor fuel element as claimed in Claim 1, characterised in that commencing from their edges, the two outer strips (2) und (3) are bevelled at the corners, towards the intermediate strip (10) arranged between the two outer strips (2) and (3), thus forming identically inclined bevels (13) and (14).

5. A nuclear reactor fuel element as claimed in Claim 4, characterised in that a rectilinear bevel continues into the intermediate strip (10) forming an acute-angled notch (19) at the ends of the intermediate strip (10).

6. A nuclear reactor fuel element as claimed in Claim 3, characterised in that the deflecting elevation (11) is formed by a tongue (16), cut-out from the lug on the one outer strip (2) in the plane of this one outer strip (2), which lug at both side edges is provided with a respective acute-angled notch (31) and (32); that the tips of these two notches are located on a bending edge (33) which is parallel to the rods (4) and at which the tongue (16) is bent at right angles into the plane of the other outer strip (3); and that this tongue (16) is attached to the exterior of this other outer strip (3).

## Revendications

1. Assemblage combustible de réacteur nucléaire, comprenant une entretoise en forme de grille à mailles carrées, dans laquelle des crayons parallèles, notamment des crayons combustibles contenant du combustible nucléaire, sont disposés chacun dans une maille et qui comporte des plaques extérieures planes transversalement aux crayons avec une bande intermédiaire parallèle aux crayons respectivement entre deux plaques extérieures et inclinée par rapport à ces deux plaques extérieures, caractérisé en ce que la bande intermédiaire (10) de l'entretoise est ménagée à l'extérieur une proéminence d'écartement (11), qui s'étend dans la direction de la diagonale de la maille de grille se trouvant au sommet (5), entre les deux plaques extérieures (2) et (3) et sur la bande intermédiaire (10) et qui est biseautée, dans la direction longitudinale des crayons (4), transversalement aux deux plaques extérieures (2) et (3) et en allant vers les deux extrémités de la bande intermédiaire (10).

2. Assemblage combustible de réacteur nucléaire suivant la revendication 1, caractérisé en ce que la proéminence d'écartement (11) se trouve sur une bande qui forme ressort (15) et qui est accrochée aux extrémités de la bande intermédiaire (10).

3. Assemblage combustible de réacteur nucléaire suivant la revendication 1, caractérisé en ce que la proéminence d'écartement (11) se trouve sur une éclisse de l'une des plaques extérieures (2), qui forme la bande intermédiaire (10) et qui est fixée par son côté intérieur à l'autre plaque extérieure (3).

4. Assemblage combustible de réacteur nucléaire suivant la revendication 1, caractérisé en ce que les deux plaques extérieures (2) et (3) sont biseautées aux sommets à partir de leurs bords et en allant vers la bande intermédiaire (10) se trouvant entre ces plaques extérieures (2) et (3), en formant des biseaux (13) et (14) d'égale inclinaison.

5. Assemblage combustible de réacteur nucléaire suivant la revendication 4, caractérisé en ce qu'un biseau rectiligne de la bande intermédiaire (10) est prolongé avec constitution d'une découpe pointue (19) aux extrémités de la bande intermédiaire (10).

6. Assemblage combustible de réacteur nucléaire suivant la revendication 3, caractérisé en ce que le proéminent d'écartement (11) est formé d'une languette (16) qui est découpée dans l'éclipse de la plaque extérieure (2) dans le plan de cette plaque extérieure (2), et qui comporte, sur deux bords latéraux, des découpes en pointe (31) et (32), en ce que les pointes de ces deux découpes se trouvent sur une arête de pliage (33) sur laquelle la languette (16) est coudée à angle droit dans le plan de l'autre plaque extérieure (3), et en ce que cette languette (16) est fixée au côté extérieur de cette autre plaque extérieure (3).

FIG 1

FIG 2

FIG 3

FIG 4